# EUROPEAN PATENT APPLICATION

(11) **EP 4 598 270 A1**
(43) Date of publication of application: **06.08.2025**
(21) Application number: 23887944.9
(22) Date of filing: 06.11.2023
(51) Int. Cl.: H05B 6/66, H05B 6/68

(54) **VARIABLE-FREQUENCY DRIVING CIRCUIT AND COOKING APPARATUS**

(30) Priority: 09.11.2022 CN 202211397379
(71) Applicant: Guangdong Midea Kitchen Appliances Manufacturing Co., Ltd., Foshan, Guangdong 528311 (CN); Guangdong Witol Vacuum Electronic Manufacture Co., Ltd, Foshan, Guangdong 528311 (CN)
(72) Inventor: LIU, Xinghua, Foshan, Guangdong 528311 (CN); CHENG, Yan, Foshan, Guangdong 528311 (CN); LI, Qinghai, Foshan, Guangdong 528311 (CN); WANG, Fubao, Foshan, Guangdong 528311 (CN); GAO, Wei, Foshan, Guangdong 528311 (CN); XU, Xiaoping, Foshan, Guangdong 528311 (CN); TAKASHIGE, Yutaka, Foshan, Guangdong 528311 (CN); LIU, Xiaodong, Foshan, Guangdong 528311 (CN)
(74) Representative: Ran, Handong
(86) International application number: PCT/CN2023/129866
(87) International publication number: WO 2024/099254

(57) **Abstract**

The present application provides a variable-frequency driving circuit and a cooking apparatus, the variable-frequency driving circuit being used for the cooking apparatus. The cooking apparatus comprises at least two heating elements, and the at least two heating elements comprise a microwave generator. The variable-frequency driving circuit comprises: a power loop, the power loop comprising a first switch element, the first switch element being used to adjust the output power of the power loop, and the power loop being connected to a common connecting terminal of the at least two heating elements; a load selection circuit, the load selection circuit being connected to the power loop, the load selection circuit having at least two output terminals, and the at least two output terminals being used to connect to a corresponding heating element; and a control circuit, connected to a control terminal of the first switch element and the load selection circuit, and used to determine a target output power and a target heating element of the at least two heating elements according to received control information, as well as control the first switch element to act according to the target power, and control the load selection circuit to select the target heating element to power on and operate.

## Description

### CROSS-REFERENCE TO RELATED APPLICATIONS

The present application claims priority to Chinese Patent Application No. 202211397379.5 filed with China National Intellectual Property Administration on November 9, 2022 and entitled "VARIABLE-FREQUENCY DRIVING CIRCUIT AND COOKING APPARATUS", the entire contents of which are herein incorporated by reference.

### FIELD

The present application relates to the field of driving technologies, and particularly relates to a variable-frequency driving circuit and a cooking apparatus.

### BACKGROUND

With the continuous development of the home appliance industry, home appliances are developing towards multi-functional integrated all-in-one and high space utilization directions, for example, a power conversion technology is developing towards a variable frequency direction of high performance and high energy efficiency.

Taking an existing micro-steaming and baking combined multi-functional kitchen cooker as an example, a variable frequency technology has been applied to the control of microwave generators, however, the variable frequency technology has not been applied to other heating methods. Based on this, when other heating methods are configured for heating, the energy efficiency and heating performance of a cooking apparatus are still relatively low, which cannot meet current energy efficiency needs.

### SUMMARY

The present application aims to solve at least one of the technical problems in the prior art or related art.

Therefore, the first aspect of the present application is to provide a variable-frequency driving circuit.

The second aspect of the present application is to provide a cooking apparatus.

In view of this, based on the first aspect of the present application, the present application provides a variable-frequency driving circuit, for a cooking apparatus, the cooking apparatus comprises at least two heating elements, and the at least two heating elements comprise a microwave generator; the variable-frequency driving circuit comprises: a power circuit, and the power circuit comprises a first switch element, the first switch element is configured to adjust the output power of the power circuit, and the power circuit is connected to a common connecting terminal of the at least two heating elements; a load selection circuit, and the load selection circuit is connected to the power circuit, the load selection circuit has at least two output terminals, and the at least two output terminals are configured to connect to a corresponding heating element; and a control circuit, connected to a control terminal of the first switch element and the load selection circuit, and configured to determine a target output power and a target heating element of the at least two heating elements based on received control information, as well as control the first switch element to act based on the target output power, and control the load selection circuit to select the target heating element for powered operation.

The embodiment of the present application provides a variable-frequency driving circuit, the variable-frequency driving circuit comprises a power circuit, a load selection circuit and a control circuit. The power circuit can achieve power adjustment, after the load selection circuit and the power circuit are connected, the load selection circuit is configured to select the load. Based on this, variable frequency control applied to a microwave generator can be applied to other heating elements. In this process, other heating elements can further achieve variable frequency control like the microwave generator, and then overcome the problem in related technical solutions that the energy efficiency and heating performance are still relatively low when heating elements other than the microwave generator are configured for heating and then current energy efficiency needs cannot be met.

In addition, the above embodiment of the present application realizes that different heating elements reuse the same power circuit. While other heating elements except the microwave generator achieve variable frequency control, no additional circuits need to be added for realizing variable frequency, and thus the cost required by other heating elements to achieve variable frequency control is lowered.

In the above embodiment, control information can be understood as control instructions received by the cooking apparatus. In another embodiment, the control information can be a microwave function, 300 watts, a baking function, 1000 watts; or a steaming function, 180 °C, etc.

In one embodiment, the first switch element in the power circuit can be controlled by the control circuit to adjust the duration of conduction in a unit cycle. The longer the duration of conduction in unit cycle is, the greater the output power of the power circuit is; conversely, the shorter the duration of conduction in unit cycle is, the less the output power of the power circuit is.

In one embodiment, it can be understood that the power circuit is a circuit configured to adjust the power provided to the heating element, while the load selection circuit is configured to select the heating element currently running in the cooking apparatus. Based on the cooperative use of the two, variable frequency control of different heating elements can be achieved.

In one embodiment, the first switch component is an insulated gate bipolar transistor (IGBT), and the IGBT is a composite fully controlled voltage driven power semiconductor device composed of a bipolar junction transistor (BJT) and a metal oxide semiconductor (MOS), and combines the advantages of high input impedance of a metal oxide semiconductor field effect transistor (MOSFET) and low conduction voltage drop of a giant transistor (GTR).

In addition, the variable-frequency driving circuit provided in the present application further has the following additional technical features.

In the above embodiment, the variable-frequency driving circuit further comprises: a communication circuit connected to the control circuit and configured for receiving the control information and sending the control information to the control circuit; and the control information is a pulse width modulation signal, and the frequency of the pulse width modulation signal corresponds to the heating elements in a one-to-one manner.

In the embodiment, a communication circuit is set up to form data communication between the communication circuit and a computer board, and when the computer board receives the user's selected function and operating power, that is, when the control information mentioned above is received, the control information is forwarded to the control circuit for the control circuit to control the power circuit and the load selection circuit, to achieve variable frequency drive and control of different heating elements.

The frequencies of the pulse width modulation signals configured for different heating elements are different, therefore, the communication circuit can be configured to select different heating elements. In this process, a plurality of heating elements reuse the same communication circuit, and the manufacturing cost of the cooking apparatus is reduced.

The load selection circuit has a first input terminal, and the power circuit further comprises a rectifier circuit having a second input terminal and a third input terminal, a first output terminal and a second output terminal. The second input terminal and the third input terminal are configured to connect to an alternating current connection terminal, the first output terminal is connected to the first input terminal, the second output terminal is connected to the first terminal of the first switch element, and the second terminal of the first switch element is connected to the common connecting terminal.

In the embodiment, it is defined that the power circuit comprises a rectifier circuit, and the arrangement of the rectifier circuit can convert the alternating current provided by the alternating current connection terminal into a direct current. In this case, the above-mentioned variable-frequency driving circuit can be applied to a scenario of alternating current power supply, and thus the application scenarios of the variable-frequency driving circuit are expanded.

The rectifier circuit has a second output terminal connected to the first input terminal of the load selection circuit, and the second output terminal of the rectifier circuit is connected to the common connecting terminal through the first switch element, and the first switch element can control the power supply of the direct current output by the rectifier circuit to the load selection circuit, and adjust the power input to the load selection circuit.

In the above embodiment, the load selection circuit can be understood as a single pole multi-throw switch, and the moving contact in the single pole multi-throw switch is connected to the second output terminal of the rectifier circuit, and each stationary contact in the single pole multi-throw switch is connected to a heating element, and after one moving contact in the single pole multi-throw switch selects one stationary contact and then is connected to the stationary contact, power is supplied to the heating element corresponding to the stationary contact.

In the above embodiment, the rectifier circuit can be understood as a rectifier. In the embodiment of the present application, the rectifier is a bridge rectifier. The bridge rectifier is composed of four rectifier silicon chips connected in a bridge configuration and wrapped in insulating plastic. The high-power bridge rectifier is wrapped in a zinc metal shell outside the insulation layer to enhance heat dissipation.

In any of the above embodiments, the power circuit further comprises: a filter circuit comprising a first resistor, and the first terminal of the first resistor is connected to the first output terminal, and the second terminal of the first resistor is connected to the second output terminal; and a capacitor connected in parallel with the first resistor.

In the embodiment, by providing a filter circuit, the filter circuit is configured to filter high-frequency voltage fluctuations in the direct current output by the rectifier circuit, and thus it is ensured that the filtered direct current can stably supply power to the load selection circuit, to reduce power supply fluctuations which cause abnormal operation of the heating elements.

The characteristics of the capacitor prevent sudden voltage changes at both terminals of the capacitor, and therefore, the capacitor has the property of hindering the rate of voltage changes, based on this, the filtered direct current is smoother, and the voltage fluctuations in the power circuit are reduced.

In any of the above embodiments, the power circuit further comprises a reactor located between the first terminal of the first resistor and the first output terminal.

In the embodiment, by providing the reactor, the cooperative use of the reactor and the filter circuit is configured to limit the high-order harmonics in the power circuit and thus reduce the power loss in the power circuit.

In one of the embodiments, the reactor comprises a coil.

In any of the above embodiments, the power circuit further comprises a detection circuit, and the input terminal of the detection circuit is connected to the second input terminal and the third input terminal, and the output terminal of the detection circuit is connected to the control circuit; and when a surge fluctuation occurs between the second input terminal and the third input terminal, the control circuit controls the power circuit to stop operating.

In this embodiment, the detection circuit is set up to read the magnitude of the supply voltage entering the rectifier circuit, thus in the event that the voltage entering the rectifier circuit is too low or too high, the power circuit is controlled to stop working to reduce the probability of damage to the variable-frequency driving circuit caused by abnormal power supply.

In any of the above embodiments, the variable-frequency driving circuit further comprises a driving circuit located between the control circuit and the control terminal of the first switch element, to drive the first switch element.

In the above embodiment, a large current or voltage is required to drive and control the first switch element, and when the control circuit controls the first switch element, the output voltage or current is limited, and this makes it difficult to achieve the control of the first switch element. Based on this, the embodiment of the present application arranges a driving circuit between the control circuit and the first switch element, and the control circuit can use the driving circuit to achieve driving and controlling the first switch element. The arrangement of the driving circuit indirectly improves the driving capability of the control circuit.

In any of the above embodiments, the load selection circuit comprises a multi-way switch, the input terminal of the multi-way switch is connected to the power circuit, and at least two output terminals of the multi-way switch are configured to connect to the corresponding heating elements.

In any of the above embodiments, in the case that the heating elements connected to the variable-frequency control circuit comprise a first heating element and a second heating element, the load selection circuit comprises: a relay having one moving contact and two stationary contacts, and the moving contact is connected to the first output terminal, the first stationary contact of the two stationary contacts is connected to the first heating element, and the second stationary contact of the two stationary contacts is connected to the second heating element; a second switch element, and the first terminal of the second switch element is connected to a first power source through the relay, and the second terminal of the second switch element is grounded; based on the conduction of the second switch element, the relay is powered on and closed, the moving contact is communicated with the first stationary contact, and the first heating element is powered on to operate; based on the cutoff of the second switch element, the relay loses power and disconnects engagement, and the moving contact is communicated with the second stationary contact, and the second heating element is powered on to operate.

In the embodiment, a detailed topology structure of the load selection circuit is provided, and the relay is an electrical control device that causes a controlled variable to have a predetermined step change in an electrical output circuit when an input quantity (excitation quantity) changes to meet specified requirements. It is actually an "automatic switch" that uses a small current to control the operation of a large current. Based on this, a small current can be configured to control the operation of a large current. Usually, a small current and a large current are in different circuits, so there is an isolation effect between the two, which improves the use safety of the variable-frequency driving circuit.

In one of the embodiments, a second switch element is set up to achieve small current control using the second switch element.

In the above embodiment, the second switch element is a transistor, and the driving control of the transistor does not require the arrangement of a driving circuit but the transistor is directly connected to the control circuit, and therefore, the complexity of the overall circuit and the difficulty of design are reduced.

Based on the second aspect of the present application, the present application provides a cooking apparatus comprising: at least two heating elements, and the at least two heating elements comprise a microwave generator; a variable-frequency driving circuit according to any of the above, and the at least two heating elements are connected to the variable-frequency driving circuit.

The embodiment of the present application provides a cooking apparatus, and the cooking apparatus comprises a variable-frequency driving circuit as described above, the variable-frequency driving circuit comprises a power circuit, a load selection circuit, and a control circuit. The power circuit can achieve power adjustment; after connecting the load selection circuit to the power circuit, the load selection circuit is configured to select the load. Based on this, the variable frequency control applied to the microwave generator can be applied to other heating elements, in this process, other heating elements can further achieve variable frequency control like the microwave generator, and the problem in related embodiments is overcome that the energy efficiency and heating performance are still relatively low when heating elements other than the microwave generator are configured for heating and then current energy efficiency needs cannot be met.

In addition, the above embodiment of the present application realizes that different heating elements reuse the same power circuit. While other heating elements except the microwave generator achieve variable frequency control, there is no need to add additional circuits for realizing variable frequency, and thus the cost required by other heating elements to achieve variable frequency control is lowered.

In the above embodiment, control information can be understood as control instructions received by the cooking apparatus. In another embodiment, the control information can be a microwave function, 300 watts, a baking function, 1000 watts; or a steaming function, 180 °C, etc.

In one embodiment, the first switch element in the power circuit can be controlled by the control circuit to adjust the duration of conduction in a unit cycle. The longer the duration of conduction in unit cycle is, the greater the output power of the power circuit is; conversely, the shorter the duration of conduction in unit cycle is, the less the output power of the power circuit is.

In one embodiment, it can be understood that the power circuit is a circuit configured to adjust the power provided to the heating element, while the load selection circuit is configured to select the heating element currently running in the cooking apparatus. Based on the cooperative use of the two, variable frequency control of different heating elements can be achieved.

In the above embodiment, the cooking apparatus further comprises: a computer board; a third switch element connected to the computer board and the power circuit, and when the computer board receives a start signal from the cooking apparatus, the third switch element is turned on to supply power to the power circuit.

In the embodiment, the computer board can be understood as the control board of the cooking apparatus, which is a component that interacts between the user and the cooking apparatus. The computer board has a control panel, and the user can send control information to the variable-frequency driving circuit through the control panel to control the operation of the variable-frequency driving circuit.

In the above embodiment, by setting the third switch element to control whether to supply power to the variable-frequency driving circuit, in this process, the cooking apparatus can control the conduction and cutoff of the third switch element based on actual use needs. When the heating element of the cooking apparatus does not need to work, the third switch element is controlled to turn off in order to cut off the power supply of the variable-frequency driving circuit. When the heating element of the cooking apparatus needs to conduct heating, the third switch element is controlled to be turned on to supply power to the variable-frequency driving circuit. In the case of supplying power to the variable-frequency driving circuit, the power circuit, the load selection circuit, the control circuit, etc. in the variable-frequency driving circuit are powered on to operate. The setting of the third switch element improves the use safety of the cooking apparatus.

In the above embodiment, the problem of high power consumption of the cooking apparatus caused by the continuous power supply of the variable-frequency driving circuit can be avoided.

In any of the above embodiments, the communication circuit of the variable-frequency driving circuit is connected to the computer board for the computer board to send control information to the communication circuit.

In any of the above embodiments, the at least two heating elements further comprise a steam generator and/or heating tube.

In the embodiment, possible selection options for the heating elements are defined to meet the practical use needs of the cooking apparatus.

In any of the above embodiments, the microwave generator comprises: a magnetron; a step-up transformer, and the first primary coil of the step-up transformer is connected to the power circuit, and the first secondary coil of the step-up transformer is connected to the magnetron; a voltage multiplier circuit connected to the second secondary coil of the step-up transformer and the magnetron.

In this embodiment, the first secondary coil has a first connecting terminal and a second connecting terminal, and the magnetron has a first connecting terminal, a second connecting terminal, and a third connecting terminal, and the third connecting terminal of the magnetron is configured for grounding, the first connecting terminal of the first secondary coil is connected to the first connecting terminal of the magnetron, the second connecting terminal of the first secondary coil is connected to the second connecting terminal of the magnetron, the second secondary coil has a first connecting terminal and a second connecting terminal, and the voltage multiplier circuit comprises a first connecting terminal, a second connecting terminal, a third connecting terminal, and a fourth connecting terminal, and the first connecting terminal of the second secondary coil is connected to the first connecting terminal of the voltage multiplier circuit, the second connecting terminal of the second secondary coil is connected to the second connecting terminal of the voltage multiplier circuit, the fourth connecting terminal of the voltage multiplier circuit is connected to the third connecting terminal of the magnetron, that is, the fourth connecting terminal of the voltage multiplier circuit is grounded with the third connecting terminal of the magnetron, and the third connecting terminal of the voltage multiplier circuit is connected to the first connecting terminal of the first secondary coil to increase the voltage value on the first connecting terminal of the magnetron.

In one of the embodiments, the voltage multiplier circuit comprises a first diode, a second diode, a first capacitor, and a second capacitor, and the anode of the first diode is connected to the cathode of the second diode and the first connecting terminal of the second secondary coil, the cathode of the first diode is connected to the first terminal of the first capacitor and the third connecting terminal of the magnetron, the second terminal of the first capacitor is connected to the first terminal of the second capacitor, and the second terminal of the second capacitor is connected to the first connecting terminal of the first secondary coil, the anode of the second diode is connected to the first connecting terminal of the first secondary coil, and the second connecting terminal of the second secondary coil is connected to the second terminal of the first capacitor.

In one possible design, the first connecting terminal of the magnetron, the second connecting terminal of the magnetron, and the third connecting terminal of the magnetron are interface structures for connecting the voltage multiplier circuit and the step-up transformer.

In any of the above embodiments, the cooking apparatus further comprises a power supply circuit connected to the second primary coil of the step-up transformer, and the power supply circuit is configured to output a power supply voltage with a preset voltage value. In this embodiment, the power supply circuit is set up to coordinate in taking power from the step-up transformer, to output a power supply voltage with a preset voltage to supply power to the control circuit, the communication circuit and the load selection circuit. During this process, there is no need to separately set power sources for the control circuit, the communication circuit and the load selection circuit, which is conducive to reducing the number of power sources set in the cooking apparatus and reducing the design difficulty of the cooking apparatus.

In one of the embodiments, the power supply circuit is further connected to the first input terminal and the second input terminal of the rectifier circuit, and the power supply circuit takes power from the first input terminal and the second input terminal of the rectifier circuit to supply power to the control circuit, the communication circuit and the load selection circuit. After the control circuit, the communication circuit and the load selection circuit are powered on to operate, power is taken from the step-up transformer based on the second primary coil.

In any of the above embodiments, one terminal of the voltage multiplier circuit is connected to a grounding point, and the cooking apparatus further comprises: a sampling resistor located between one terminal of the voltage multiplier circuit and the grounding point, the first terminal of the sampling resistor is connected to one terminal of the voltage multiplier circuit, and the second terminal of the sampling resistor is connected to the grounding point; and the first terminal of the sampling resistor is connected to the computer board and is configured to provide feedback on the operating status of the microwave generator.

In this embodiment, the arrangement of the sampling resistor can achieve feedback of the current operating status of the microwave generator, and the control circuit can detect the current operating status of the microwave generator after obtaining it. If the current operating status of the microwave generator is detected to be abnormal, the power circuit is controlled to stop running to reduce the probability of the failure of the cooking apparatus.

In addition, if the current operating status of the microwave generator is detected to be abnormal, a message of the failure of the microwave generator is transmitted to the computer board through the communication circuit, and the computer board cuts off the third switch element, to reduce the probability of the failure of the cooking apparatus and improve the reliability of the operation of the cooking apparatus.

The additional aspects and advantages of the present application will be partially presented in the following description, will partially become apparent from the following description, or be learned through practice of the present application.

### BRIEF DESCRIPTION OF THE DRAWINGS

The above and/or additional aspects and advantages of the present application will become apparent and easily understood from the description of the embodiments in combination with the following figures.
FIG. 1 is a first schematic view of the topology of a variable-frequency driving circuit in an embodiment of the present application;
FIG. 2 is a second schematic view of the topology of a variable-frequency driving circuit in an embodiment of the present application;
FIG. 3 is a third schematic view of the topology of a variable-frequency driving circuit in an embodiment of the present application;
FIG. 4 is a fourth schematic view of the topology of a variable-frequency driving circuit in an embodiment of the present application; and
FIG. 5 is a schematic view of the topology of a cooking apparatus in an embodiment of the present application.

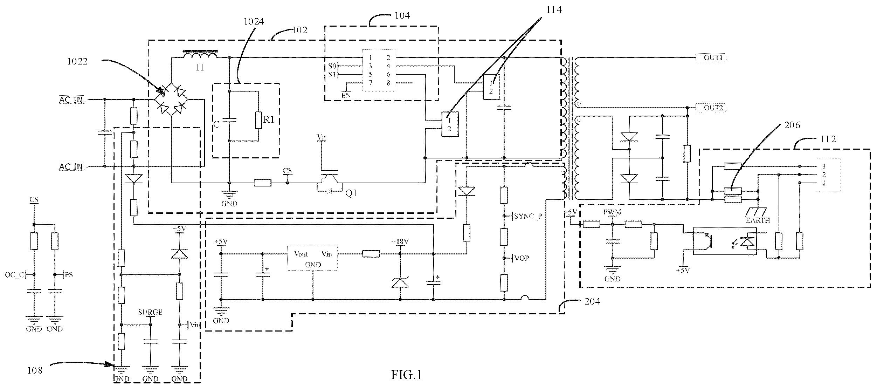

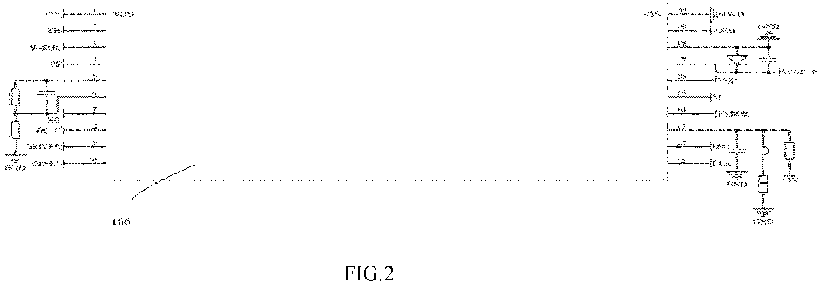

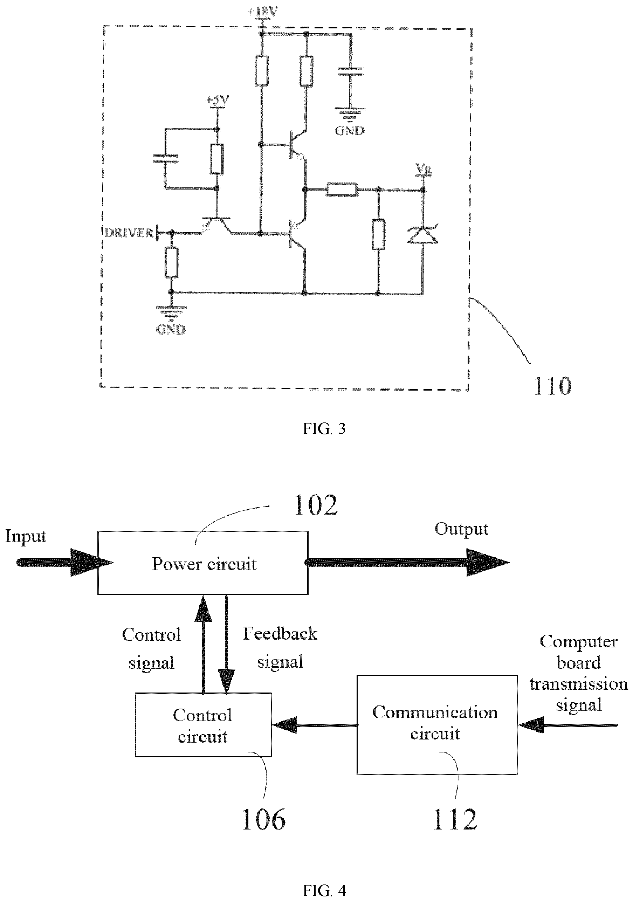

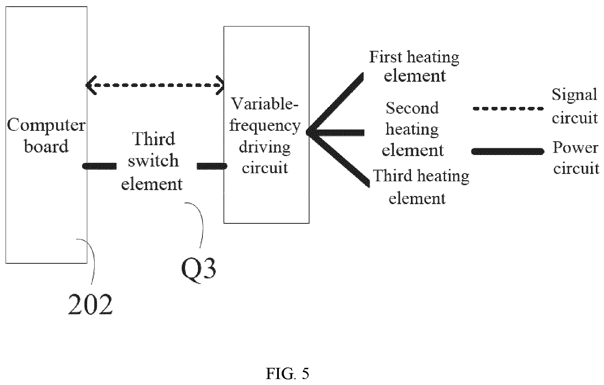

The corresponding relationships between the reference signs and the component names in FIG. 1 to FIG. 5 are as follows:
102 power circuit, 104 load selection circuit, Q1 first switch element, 106 control circuit, 1022 rectifier circuit, 1024 filter circuit, R1 first resistor, C capacitor, H reactor, 108 detection circuit, 110 driving circuit, 112 communication circuit, 114 heating element connecting interface, 202 computer board, Q3 third switch element, 204 power supply circuit, 206 sampling resistor.

### DETAILED DESCRIPTION OF THE APPLICATION

To more clearly understand the above aspects, features and advantages of the present application, the present application will be further detailed hereinafter in combination with the accompanying drawings and embodiments. It should be indicated that the embodiments and the features in the embodiments can be combined with each other in the case of no conflict.

Many details are illustrated in the following description for the convenience of a thorough understanding of the present application, but the present application can further be implemented using other embodiments other than these described herein. Therefore, the protection scope of the present application is not limited to the specific embodiments disclosed in the following text.

As shown in FIG. 1, FIG. 2, FIG. 3, FIG. 4 and FIG. 5, based on a variable-frequency driving circuit for a cooking apparatus of the present application, the cooking apparatus comprises at least two heating elements, and the at least two heating elements comprise a microwave generator; the variable-frequency driving circuit comprises: a power circuit 102, and the power circuit 102 comprises a first switch element Q1, the first switch element Q1 is configured to adjust the output power of the power circuit 102, and the power circuit 102 is connected to a common connecting terminal of the at least two heating elements; a load selection circuit 104, and the load selection circuit 104 is connected to the power circuit 102, the load selection circuit 104 has at least two output terminals, and the at least two output terminals are configured to connect to a corresponding heating element; and a control circuit 106, connected to a control terminal of the first switch element Q1 and the load selection circuit 104, and configured to determine a target output power and a target heating element of the at least two heating elements based on received control information, as well as control the first switch element Q1 to act based on the target output power, and control the load selection circuit 104 to select the target heating element for powered operation.

The embodiment of the present application provides a variable-frequency driving circuit 110, the variable-frequency driving circuit 110 comprises a power circuit 102, a load selection circuit 104 and a control circuit 106. The power circuit 102 can achieve power adjustment, after the load selection circuit 104 and the power circuit 102 are connected, the load selection circuit 104 is configured to select the load. Based on this, variable frequency control applied to a microwave generator can be applied to other heating elements. In this process, other heating elements can further achieve variable frequency control like the microwave generator, and then the problem in related embodiments is overcome that the energy efficiency and heating performance are still relatively low when heating elements other than the microwave generator are configured for heating and then current energy efficiency needs cannot be met.

In addition, the above embodiment of the present application realizes that different heating elements reuse the same power circuit 102. While other heating elements except the microwave generator achieve variable frequency control, there is no need to add additional circuits for realizing variable frequency, and thus the cost required by other heating elements to achieve variable frequency control is lowered.

In the above embodiment, control information can be understood as control instructions received by the cooking apparatus. In another embodiment, the control information can be a microwave function, 300 watts, a baking function, 1000 watts; or a steaming function, 180 °C, etc.

In one embodiment, the first switch element Q1 in the power circuit 102 can be controlled by the control circuit 106 to adjust the duration of conduction in a unit cycle. The longer the duration of conduction in unit cycle is, the greater the output power of the power circuit 102 is; conversely, the shorter the duration of conduction in unit cycle is, the less the output power of the power circuit 102 is.

In one embodiment, it can be understood that the power circuit 102 is a circuit configured to adjust the power provided to the heating element, while the load selection circuit 104 is configured to select the heating element currently running in the cooking apparatus. Based on the cooperative use of the two, variable frequency control of different heating elements can be achieved.

In one embodiment, the heating element adopts a heating element connecting interface 114 and a load selection circuit 104.

In one embodiment, the first switch component Q1 is an insulated gate bipolar transistor (IGBT), and the IGBT is a composite fully controlled voltage driven power semiconductor device composed of a bipolar junction transistor (BJT) and a metal oxide semiconductor (MOS), and combines the advantages of high input impedance of a metal oxide semiconductor field effect transistor (MOSFET) and low conduction voltage drop of a giant transistor (GTR).

In some embodiments of the present application, the variable-frequency driving circuit further comprises: a communication circuit 112 connected to the control circuit 106 and configured for receiving control information and sending the control information to the control circuit 106; and the control information is a pulse width modulation signal, and the frequency of the pulse width modulation signal corresponds to the heating elements in a one-to-one manner.

In the embodiment, a communication circuit 112 is set up to form data communication between the communication circuit 112 and a computer board 202, therefore, when the computer board 202 receives the user's selected function and operating power, that is, when the control information mentioned above is received, the control information is forwarded to the control circuit 106 for the control circuit 106 to control the power circuit 102 and the load selection circuit 104, to achieve variable frequency drive and control of different heating elements.

The frequencies of the pulse width modulation signals configured for different heating elements are different, therefore, the communication circuit 112 can be configured to select different heating elements. In this process, a plurality of heating elements reuse the same communication circuit, thus the manufacturing cost of the cooking apparatus is reduced.

In the above embodiment, the load selection circuit 104 has a first input terminal, and the power circuit 102 further comprises a rectifier circuit 1022 having a second input terminal and a third input terminal, a first output terminal and a second output terminal. The second input terminal and the third input terminal are configured to connect to an alternating current connection terminal, the first output terminal is connected to the first input terminal, the second output terminal is connected to the first terminal of the first switch element Q1, and the second terminal of the first switch element Q1 is connected to the common connecting terminal.

In the embodiment, it is defined that the power circuit 102 comprises a rectifier circuit 1022, and the arrangement of the rectifier circuit 1022 can convert the alternating current provided by the AC connection terminal into a direct current. In this case, the above-mentioned variable-frequency driving circuit can be applied to a scenario of alternating current power supply, and thus the application scenarios of the variable-frequency driving circuit 110 are expanded.

The rectifier circuit 1022 has a second output terminal connected to the first input terminal of the load selection circuit 104, and the second output terminal of the rectifier circuit 1022 is connected to the common connecting terminal through the first switch element Q1, and the first switch element Q1 can control the power supply of the rectifier circuit 1022 to the load selection circuit 104, and adjust the power input to the load selection circuit 104.

In the above embodiment, the load selection circuit 104 can be understood as a single pole multi-throw switch, and the moving contact in the single pole multi-throw switch is connected to the second output terminal of the rectifier circuit 1022, and each stationary contact in the single pole multi-throw switch is connected to a heating element, and after one moving contact in the single pole multi-throw switch selects one stationary contact and then is connected to the stationary contact, power is supplied to the heating element corresponding to the stationary contact.

In the above embodiment, the rectifier circuit 1022 can be understood as a rectifier. In the embodiment of the present application, the rectifier is a bridge rectifier. The bridge rectifier is composed of four rectifier silicon chips connected in a bridge configuration and wrapped in insulating plastic. The high-power bridge rectifier is wrapped in a zinc metal shell outside the insulation layer to enhance heat dissipation.

In any of the above embodiments, the power circuit 102 further comprises: a filter circuit 1024 comprising a first resistor R1, and the first terminal of the first resistor R1 is connected to the first output terminal, and the second terminal of the first resistor R1 is connected to the second output terminal; and a capacitor C connected in parallel with the first resistor R1.

In the embodiment, by providing a filter circuit, the filter circuit is configured to filter high-frequency voltage fluctuations in the direct current output by the rectifier circuit 1022, and thus it is ensured that the filtered direct current can stably supply power to the load selection circuit 104, to reduce power supply fluctuations which cause abnormal operation of the heating elements.

The characteristics of the capacitor C prevent sudden voltage changes at both terminals of the capacitor, and therefore, the capacitor has the property of hindering the rate of voltage changes, based on this, the filtered direct current is smoother, and the voltage fluctuations in the power circuit 102 are reduced.

In any of the above embodiments, the power circuit 102 further comprises a reactor H located between the first terminal of the first resistor R1 and the first output terminal.

In the embodiment, by providing the reactor H, the cooperative use of the reactor H and the filter circuit 1024 is configured to limit the high-order harmonics in the power circuit 102 and thus reduce the power loss in the power circuit 102.

In one of the embodiments, the reactor H comprises a coil.

In any of the above embodiments, the power circuit 102 further comprises a detection circuit 108, and the input terminal of the detection circuit 108 is connected to the second input terminal and the third input terminal, and the output terminal of the detection circuit 108 is connected to the control circuit 106; and when a surge fluctuation occurs between the second input terminal and the third input terminal, the control circuit 106 controls the power circuit 102 to stop operating.

In this embodiment, the detection circuit 108 is set up to read the magnitude of the supply voltage entering the rectifier circuit 1022, thus, in the event that the voltage entering the rectifier circuit 1022 is too low or too high, the power circuit 102 is controlled to stop working to reduce the probability of damage to the variable-frequency driving circuit 110 caused by abnormal power supply.

In any of the above embodiments, the variable-frequency driving circuit further comprises a driving circuit 110 located between the control circuit 106 and the control terminal of the first switch element Q1, for driving the first switch element Q1.

In the above embodiment, a large current or voltage is required to drive and control the first switch element Q1, and when the control circuit 106 controls the first switch element Q1, the output voltage or current is limited, and this makes it difficult to achieve the control of the first switch element Q1. Based on this, the embodiment of the present application arranges a driving circuit 110 between the control circuit 106 and the first switch element Q1, and the control circuit 106 can use the driving circuit 110 to achieve driving and controlling the first switch element Q1. The arrangement of the driving circuit 110 indirectly improves the driving capability of the control circuit 106.

In any of the above embodiments, the load selection circuit comprises a multi-way switch, the input terminal of the multi-way switch is connected to the power circuit, and at least two output terminals of the multi-way switch are configured to connect to the corresponding heating elements.

The control circuit 106 selects the target heating element to operate by outputting S0 and S1.

In another embodiment, when S0 is 0 and S1 is 1, the target heating element is a microwave generator. When S0 is 1 and S1 is 0, the target heating element is the first heating element, such as a steam generator. When S0 is 1 and S1 is 1, the target heating element is the second heating element, such as a heating tube.

In any of the above embodiments, in the case that the heating elements connected to the variable-frequency control circuit 106 comprise a first heating element and a second heating element, the load selection circuit 104 comprises: a relay having one moving contact and two stationary contacts, and the moving contact is connected to the first output terminal, the first stationary contact of the two stationary contacts is connected to the first heating element, and the second stationary contact of the two stationary contacts is connected to the second heating element; a second switch element, and the first terminal of the second switch element is connected to a first power source through the relay, and the second terminal of the second switch element is grounded; based on the conduction of the second switch element, the relay is powered on and closed, the moving contact communicates with the first stationary contact, and the first heating element is powered on to operate; based on the cutoff of the second switch element, the relay loses power and disconnects engagement, and the moving contact communicates with the second stationary contact, and the second heating element is powered on to operate.

One of the first heating element and the second heating element is a microwave generator.

In the embodiment, a detailed topology structure of the load selection circuit 104 is provided, and the relay is an electrical control device that causes a controlled variable to have a predetermined step change in an electrical output circuit when an input quantity (excitation quantity) changes to meet specified requirements. It is actually an "automatic switch" that uses a small current to control the operation of a large current. Based on this, a small current can be configured to control the operation of a large current. Usually, a small current and a large current are in different circuits, so there is an isolation effect between the two, which improves the use safety of the variable-frequency driving circuit 110.

In one of the embodiments, a second switch element is set up to achieve small current control using the second switch element.

In the above embodiment, the second switch element is a transistor, and the driving control of the transistor does not require the arrangement of a driving circuit but the transistor is directly connected to the control circuit, and therefore, the complexity of the overall circuit and the difficulty of design are reduced.

In one of the embodiments, the present application provides a cooking apparatus comprising: at least two heating elements, and the at least two heating elements comprise a microwave generator; a variable-frequency driving circuit 110 according to any of the above, and the at least two heating elements are connected to the variable-frequency driving circuit 110.

The embodiments of the present application provide a cooking apparatus, and the cooking apparatus comprises the variable-frequency driving circuit 110 as described above, and therefore has all the beneficial technical effects of the variable-frequency driving circuit 110, which will not be repeated here.

In the above embodiment, the cooking apparatus further comprises: a computer board 202; a third switch element Q3 connected to the computer board 202 and the power circuit 102, and when the computer board 202 receives a start signal from the cooking apparatus, the third switch element Q3 is turned on to supply power to the power circuit 102.

In the embodiment, the computer board 202 can be understood as the control board of the cooking apparatus, which is a component that interacts between the user and the cooking apparatus. The computer board 202 has a control panel, and the user can send control information to the variable-frequency driving circuit 110 through the control panel to control the operation of the variable-frequency driving circuit 110.

In the above embodiment, by setting the third switch element Q3 to control whether to supply power to the variable-frequency driving circuit 110, in this process, the cooking apparatus can control the conduction and cutoff of the third switch element Q3 based on actual use needs. When the heating element of the cooking apparatus does not need to work, the third switch element Q3 is controlled to turn off in order to cut off the power supply of the variable-frequency driving circuit 110. When the heating element of the cooking apparatus needs to conduct heating, the third switch element Q3 is controlled to be turned on to supply power to the variable-frequency driving circuit 110. In the case of supplying power to the variable-frequency driving circuit 110, the power circuit 102, the load selection circuit 104, the control circuit 106, etc. in the variable-frequency driving circuit 110 are powered on to operate. The setting of the third switch element Q3 improves the use safety of the cooking apparatus.

In the above embodiment, the problem of high power consumption of the cooking apparatus caused by the continuous power supply of the variable-frequency driving circuit 110 can be avoided.

In any of the above embodiments, the communication circuit 112 of the variable-frequency driving circuit 110 is connected to the computer board 202 for the computer board to send control information to the communication circuit 112.

In any of the above embodiments, the at least two heating elements further comprise a steam generator and/or heating tube.

In the embodiment, possible selection options for the heating elements are defined to meet the practical use needs of the cooking apparatus.

In any of the above embodiments, the microwave generator comprises: a magnetron; a step-up transformer, and the first primary coil of the step-up transformer is connected to the power circuit 102, and the first secondary coil of the step-up transformer is connected to the magnetron; a voltage multiplier circuit connected to the second secondary coil of the step-up transformer and the magnetron.

In this embodiment, the first secondary coil has a first connecting terminal and a second connecting terminal, and the magnetron has a first connecting terminal, a second connecting terminal, and a third connecting terminal, and the third connecting terminal of the magnetron is configured for grounding, the first connecting terminal of the first secondary coil is connected to the first connecting terminal of the magnetron, the second connecting terminal of the first secondary coil is connected to the second connecting terminal of the magnetron, the second secondary coil has a first connecting terminal and a second connecting terminal, and the voltage multiplier circuit comprises a first connecting terminal, a second connecting terminal, a third connecting terminal, and a fourth connecting terminal, and the first connecting terminal of the second secondary coil is connected to the first connecting terminal of the voltage multiplier circuit, the second connecting terminal of the second secondary coil is connected to the second connecting terminal of the voltage multiplier circuit, the fourth connecting terminal of the voltage multiplier circuit is connected to the third connecting terminal of the magnetron, that is, the fourth connecting terminal of the voltage multiplier circuit is grounded with the third connecting terminal of the magnetron, and the third connecting terminal of the voltage multiplier circuit is connected to the first connecting terminal of the first secondary coil to increase the voltage value on the first connecting terminal of the magnetron.

In one of the embodiments, the voltage multiplier circuit comprises a first diode, a second diode, a first capacitor, and a second capacitor, and the anode of the first diode is connected to the cathode of the second diode and the first connecting terminal of the second secondary coil, the cathode of the first diode is connected to the first terminal of the first capacitor and the third connecting terminal of the magnetron, the second terminal of the first capacitor is connected to the first terminal of the second capacitor, and the second terminal of the second capacitor is connected to the first connecting terminal of the first secondary coil, the anode of the second diode is connected to the first connecting terminal of the first secondary coil, and the second connecting terminal of the second secondary coil is connected to the second terminal of the first capacitor.

In one possible design, the first connecting terminal of the magnetron, the second connecting terminal of the magnetron, and the third connecting terminal of the magnetron are interface structures for connecting the voltage multiplier circuit and the step-up transformer.

In any of the above embodiments, the cooking apparatus further comprises a power supply circuit 204 connected to the second primary coil of the step-up transformer, and the power supply circuit 204 is configured to output a power supply voltage with a preset voltage value.

In this embodiment, the power supply circuit 204 is set up to coordinate in taking power from the step-up transformer, to output a power supply voltage with a preset voltage to supply power to the control circuit 106, the communication circuit 112 and the load selection circuit 104. During this process, there is no need to separately set power sources for the control circuit 106, the communication circuit 112 and the load selection circuit 104, which is conducive to reducing the number of power sources set in the cooking apparatus and reducing the design difficulty of the cooking apparatus. Illustratively, the power supply circuit 204 is connected to an alternating current through an AC IN.

In one of the embodiments, the power supply circuit 204 is further connected to the first input terminal and the second input terminal of the rectifier circuit 1022, and the power supply circuit 204 takes power from the first input terminal and the second input terminal of the rectifier circuit 1022 to supply power to the control circuit 106, the communication circuit 112 and the load selection circuit 104. After the control circuit 106, the communication circuit 112 and the load selection circuit 104 are powered on to operate, power is taken from the step-up transformer based on the second primary coil.

In any of the above embodiments, one terminal of the voltage multiplier circuit is connected to a grounding point, and the cooking apparatus further comprises: a sampling resistor 206 located between one terminal of the voltage multiplier circuit and the grounding point, for connecting the first terminal of the sampling resistor 206 with one terminal of the voltage multiplier circuit, and the second terminal of the sampling resistor 206 is connected to the grounding point; and the first terminal of the sampling resistor 206 is connected to the computer board 202 and is configured to provide feedback on the operating status of the microwave generator.

In this embodiment, the arrangement of the sampling resistor 206 can achieve feedback of the current operating status of the microwave generator, and the control circuit 106 can detect the current operating status of the microwave generator after obtaining it. If the current operating status of the microwave generator is detected to be abnormal, the power circuit 102 is controlled to stop running to reduce the probability of the failure of the cooking apparatus.

In addition, if the current operating status of the microwave generator is detected to be abnormal, a message of the failure of the microwave generator is transmitted to the computer board 202 through the communication circuit 112, and the computer board 202 cuts off the third switch element Q3, to reduce the probability of the failure of the cooking apparatus and improve the reliability of the operation of the cooking apparatus.

In one embodiment, the third switch element Q3 is a relay. When the user sets a microwave function, the relay on the computer board is engaged to supply power to the variable-frequency integrated circuit (i.e. the variable-frequency driving circuit mentioned above), the computer board sends a pulse width modulation (PWM) signal to the variable-frequency integrated circuit, with a frequency range of 350Hz-2000Hz, corresponding to the input power under the microwave function. At this time, the variable-frequency integrated circuit enters the microwave function based on the signal; when the user switches to a barbecue mode, the PWM signal sent by the computer board to the variable-frequency integrated circuit is 2500Hz-4500Hz, corresponding to the input power of 0W-2000W in the barbecue mode. The variable-frequency integrated circuit switches to a barbecue working mode, controls the multi-way switch, and switches the load from the original switch transformer to the heating tube.

The detection circuit 108 in FIG. 1 is connected to the control circuit 106 through SUREG and Vin. The CS, PS, and OC_C of the control circuit 106 are grounded through capacitors, connected to the driving circuit 110 through DRIVER, achieve resetting via RESET, connected to the communication circuit 112 through a PWM pin, and connected to the power supply circuit 204 through SYNC_P and VOP, and an error is output through ERROR, clock and digital input and output are achieved based on DIO and CLK, Vg connects the driving circuit 110 to the first switch element Q1, and VDD and VSS are the power supply connecting terminals of the chip, GND indicates grounding, and the load selection circuit 104 achieves enabling control through EN.

The features of the terms "first" and "second" in the specification and claims of the present application may explicitly or implicitly comprise one or more of these features. In the textual description of the present application, unless otherwise specified, the meaning of "a plurality of" refers to two or more. In addition, in the specification and claims, the term "and/or" represents at least one of connected objects, and the character "/" generally indicates an "or" relationship between the related objects before and after the character.

In the textual description of the present application, it can be understood that, unless otherwise specified and defined, the terms "mount", "connected with", and "connected to" should be understood in a broad sense. For example, they can be fixed connections, detachable connections, or integral connections; they can be a mechanical structure connection or an electrical connection; they can be a direct connection between two, or an indirect connection of two through an intermediate medium, or a communication inside two elements. For those of ordinary skills in this field, the specific meanings of the above terms in the present application can be understood in specific situations.

In the claims, specification and accompanying drawings of the present application, the term of "a plurality of" refers to two or more, unless otherwise clearly defined. The orientation or position relations indicated by the terms of "upper", "lower" and the like are based on the orientation or position relations shown in the accompanying drawings, and are just intended to conveniently describe the present application and simplify the description, and are not intended to indicate or imply that the devices or units as indicated should have specific orientations or should be configured or operated in specific orientations, and then such description should not be construed as limitations to the present application. The terms "connect", "mount", "fix" and the like should be understood in a broad sense, for example, the term "connect" can be a fixed connection between a plurality of objects, a detachable connection between a plurality of objects, or an integral connection; it can be a direct connection between a plurality of objects, or an indirect connection between a plurality of objects through an intermediate medium. For those of ordinary skills in this field, the specific meanings of the above terms in the present application can be understood based on the specific situations of the above data.

In the claims, specification and accompanying drawings of the present application, the descriptions of the phrases "one embodiment", "some embodiments" or "specific embodiments" and the like mean that the specific features, structures, materials or characteristics described in combination with the embodiment or example are included in at least one embodiment or example of the present application. In the claims, specification and accompanying drawings of the present application, the illustrative expressions of the above terms may not necessarily refer to the same embodiments or examples. Moreover, the specific features, structures, materials, or characteristics described can be combined in any one or more embodiments or examples in a suitable manner.

The above are only some embodiments of the present application and are not intended to limit the present application. For those skilled in the art, the present application may have various modifications and variations. Any modifications, equivalent substitutions, improvements, etc. made within the spirit and principles of this application shall be included within the scope of protection of this application.

## Claims

1. A variable-frequency driving circuit for a cooking apparatus, wherein the cooking apparatus comprises at least two heating elements, the at least two heating elements comprise a microwave generator, and the variable-frequency driving circuit comprises:
a power circuit, comprising a first switch element configured to adjust the output power of the power circuit, and connected to a common connecting terminal of the at least two heating elements;
a load selection circuit, connected to the power circuit, and having at least two output terminals which are configured to connect to a corresponding heating element; and
a control circuit, connected to a control terminal of the first switch element and the load selection circuit, and configured to
determine a target output power and a target heating element of the at least two heating elements based on received control information, and
control the first switch element to act based on the target output power, and control the load selection circuit to select the target heating element for powered operation.

2. The variable-frequency driving circuit according to claim 1, further comprising:
a communication circuit connected to the control circuit, configured for receiving the control information and sending the control information to the control circuit,
wherein the control information is a pulse width modulation signal, and frequency of the pulse width modulation signal corresponds to the heating element in a one-to-one manner.

3. The variable-frequency driving circuit according to claim 1 or 2, wherein, the load selection circuit has a first input terminal, and the power circuit further comprises:
a rectifier circuit having a second input terminal and a third input terminal, and a first output terminal and a second output terminal, wherein
the second input terminal and the third input terminal are configured to connect to an alternating current connection terminal, the first output terminal is connected to the first input terminal, the second output terminal is connected to a first terminal of the first switch element, and a second terminal of the first switch element is connected to the common connecting terminal.

4. The variable-frequency driving circuit according to claim 3, wherein, the power circuit further comprises a filter circuit comprising:
a first resistor, having a first terminal connected to the first output terminal, and a second terminal connected to the second output terminal; and
a capacitor, connected in parallel with the first resistor.

5. The variable-frequency driving circuit according to claim 4, wherein, the power circuit further comprises:
a reactor located between a first terminal of the first resistor and the first output terminal.

6. The variable-frequency driving circuit according to claim 3, wherein, the power circuit further comprises:
a detection circuit, having an input terminal connected to the second input terminal and the third input terminal, and an output terminal connected to the control circuit;
wherein, when a surge fluctuation occurs between the second input terminal and the third input terminal, the control circuit controls the power circuit to stop operating.

7. The variable-frequency driving circuit according to claim 3, further comprising:
a driving circuit located between the control circuit and the control terminal of the first switch element, configured to drive the first switch element to operate.

8. The variable-frequency driving circuit according to claim 7, wherein, the load selection circuit comprises a multi-way switch, an input terminal of the multi-way switch is connected to the power circuit, and at least two output terminals of the multi-way switch are configured to connect to corresponding heating elements.

9. A cooking apparatus, comprising:
at least two heating elements, comprise a microwave generator; and
a variable-frequency driving circuit according to any one of claims 1 to 8, wherein the at least two heating elements are connected to the variable-frequency driving circuit.

10. The cooking apparatus according to claim 9, further comprising:
a computer board; and
a third switch element connected to the computer board and the power circuit, wherein, when the computer board receives a start signal from the cooking apparatus, the third switch element is turned on to supply power to the power circuit.

11. The cooking apparatus according to claim 10, wherein, the communication circuit of the variable-frequency driving circuit is connected to the computer board for sending the control information to the communication circuit.

12. The cooking apparatus according to claim 10, wherein, the at least two heating elements further comprise:
a steam generator and/or heating tube.

13. The cooking apparatus according to any one of claims 10 to 12, wherein, the microwave generator comprises:
a magnetron;
a step-up transformer, having a first primary coil connected to the power circuit, and a first secondary coil connected to the magnetron; and
a voltage multiplier circuit connected to a second secondary coil of the step-up transformer and the magnetron.

14. The cooking apparatus according to claim 13, further comprising:
a power supply circuit, connected to the second primary coil of the step-up transformer, and configured to output a power supply voltage with a preset voltage value.

15. The cooking apparatus according to claim 13, wherein, one terminal of the voltage multiplier circuit is connected to a grounding point, and the cooking apparatus further comprises:
a sampling resistor located between one terminal of the voltage multiplier circuit and the grounding point, wherein
a first terminal of the sampling resistor is connected to one terminal of the voltage multiplier circuit, and a second terminal of the sampling resistor is connected to the grounding point; and
the first terminal of the sampling resistor is connected to the computer board and is configured to provide feedback on the operating status of the microwave generator.
